# EUROPEAN PATENT APPLICATION

(11) **EP 0 981 196 A2**
(43) Date of publication of application: **23.02.2000**
(21) Application number: 99116015.1
(22) Date of filing: 14.08.1999
(51) Int. Cl.: H02M 1/10

(54) **A power supply for a vibrating compressor**

(30) Priority: 18.08.1998 JP 23131198
(71) Applicant: SAWAFUJI ELECTRIC CO., LTD., Nerima-ku, Tokyo (JP)
(72) Inventor: Namai, Masao, C/O Sawafuji Electric Co., Ltd., Nitta-gun, Gunma-ken (JP); Akazawa, Naoki, C/O Sawafuji Electric Co., Ltd., Nitta-gun, Gunma-ken (JP)
(74) Representative: Reichel, Wolfgang, Dipl.-Ing.

(57) **Abstract**

The present invention selectively changes over a DC power supply from a battery 2 to a voltage obtained by converting a commercial power to DC. The inverter 6 converts DC into AC though the alternate switching of two switching elements, and the control section 7 controls an AC output to be supplied from the inverter to the vibrating compressor 1. The DC/DC converter 17 control the output voltage to a predetermined value, regardless of changes in input voltage so that an AC output of a predetermined voltage value can be supplied to the vibrating compressor 1 relying on multiple types of commercial powers of different voltages and multiple types of batteries of different voltages. The present invention can automatically adapt for widely changing power voltages and judge a drop of battery voltage, regardless of a wide range of input voltages.

## Description

### TECHNICAL FIELD

The present invention relates generally to a power supply for a vibrating compressor that supplies power via an inverter, and more specifically to a power supply for a vibrating compressor that may be operated over a wide range of input voltages of either alternating current (AC) or direct current (DC).

### BACKGROUND OF THE INVENTION

Heretofore, an AC/DC-powered power supply as shown in FIG. 9 (refer to Published Unexamined Japanese Patent Application No. Hei-7(1995)-111781) is publicly known as a power supply for a vibrating compressor. A vibrating compressor 1 is a compressor for refrigerators that may be operated on a low-voltage AC voltage, such as 12 V or 24 V. A battery 2 is a DC power supply as mounted on automobiles, generating a 12-V or 24-V DC voltage.

A DC voltage E from the battery 2, or a voltage equal to the voltage E obtained by converting a commercial power 10 into direct current by an AC/DC converter 8 is changed over by an automatic switching device 9, converted into an AC voltage by an inverter 6 and fed to the vibrating compressor 1. The inverter 6 comprises a first transistor 52 and a second transistor 53, each of which is turned on alternately to generate AC voltage.

A voltage E fed by the battery or AC/DC converted by the AC/DC converter 8 is applied to the first transistor 52, whereas a voltage -E is applied to the second transistor 53 via a polarity inversion circuit 3. The polarity inversion circuit 3 is a circuit comprising a transistor 11, a pulse generating circuit 12, a choke coil 13, a diode 14 and a capacitor 15 for generating a DC voltage -E by inverting the polarity of the DC voltage E with respect to the round.

A control section 7 controls so as to change the frequency of the AC voltage output of the inverter 6 to be applied to the vibrating compressor 1 by changing the duty ratio of each output waveform of the first and second transistors 52 and 53.

It is publicly known that the vibrating compressor 1, whose resonance frequency tends to change in accordance with fluctuations in load and depending on the service environment, cannot be operated at high efficiency if the power frequency fed to the vibrating compressor 1 is kept constant, and that the efficiency of the vibrating compressor 1 can be maximized by controlling the frequency so as to minimize the difference between peak values for the first half and the second half of the current waveform flowing in the vibrating compressor 1.

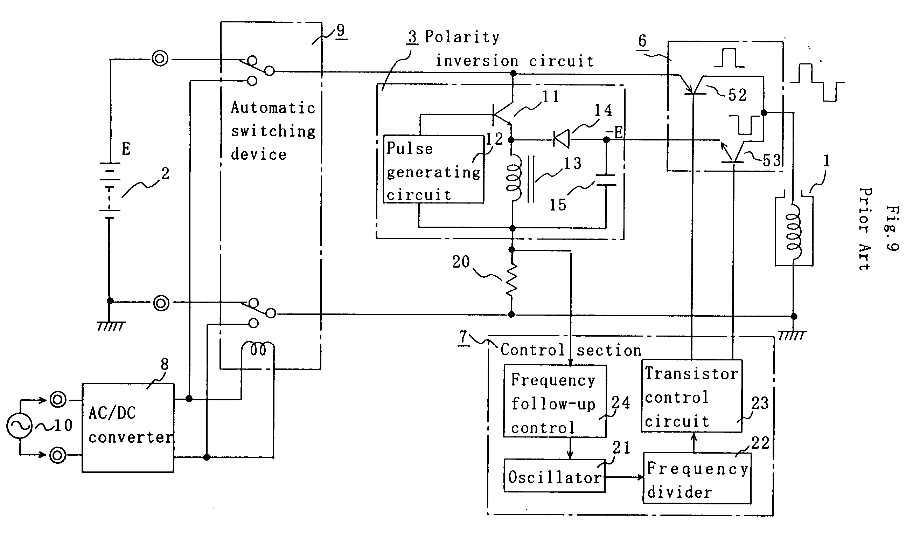

A frequency follow-up control circuit 24 shown in FIG. 9 compares the average values of currents flowing in a shunt resistor 20 for the first and second half periods of the oscillating frequency generated by an oscillator 21, and generates a control signal for controlling the oscillating frequency of the oscillator 21 so that the difference between the average values equals to a predetermined value. As a result, pulses of a frequency corresponding to the control signal are generated by the oscillator 21, divided in a frequency divider 22 to cause a transistor control circuit 23 to control first and second transistors 52 and 53. Thus, an AC voltage of a frequency following the change in resonance frequency in accordance with a change in the load of the vibrating compressor 1 can be generated, and thereby the vibrating compressor 1 can be driven at the highest efficiency.

Although the aforementioned conventional power supply is of an AC/DC type, it can be operated only on a particular voltage, 12 V or 24 V, for example, and is not adapted to be operated over a wide range of input voltages.

Since the, aforementioned power supply applies an AC voltage having positive and negative potentials centering around the zero potential to the vibrating compressor, one terminal of the vibrating compressor can be connected to the ground, and a cord can therefore be connected to the case of the vibrating compressor. But a polarity inversion circuit of the aforementioned type is required to achieve the purpose.

A circuit for detecting the difference between peak values for the first and second halves of a current waveform flowing in the vibrating compressor is required to be of a simple construction and detect the average values positively and accurately, regardless of fluctuations in frequency.

### DISCLOSURE OF THE INVENTION

To take into account these circumstances, it is an object of the present invention to provide a power supply for a vibrating compressor that can be adapted automatically and flexibly for operation over a wide range of input voltages, such as alternating current of 100 V or 200 V, or direct current of 12 V or 24 V.

It is another object of the present invention to provide a power supply for a vibrating compressor that can detect a drop of battery voltage in spite of the capability of operating over a wide range of input voltages.

It is a further object of the present invention to enable one terminal of a vibrating compressor to be connected to the ground without need for a polarity inversion circuit for generating a negative-potential power.

It is still another object of the present invention to positively and accurately detect the difference between peak values for the first and second halves of a current waveform with a simple circuit configuration, regardless of fluctuations in frequency.

It is still another object of the present invention to supply a predetermined voltage to a fan motor with a simple circuit configuration in spite of the capability of operating over a wide range of input voltages.

The power supply for a vibrating compressor 1 according to the present invention selectively changes over from a battery 2 as a DC power supply to a voltage source obtained by converting commercial power to a direct current of a corresponding voltage via an AC/DC converter 8, and vice versa. An inverter 6 has two switching elements (FETs 4 and 5) for converting DC to AC through the alternate switching of the switching elements; the control section 7 thereof controlling an AC output supplied by the inverter 6 to the vibrating compressor 1. A DC/DC converter 17 controls its output voltage to a predetermined value, regardless of changes in input voltage, and delivers the output voltage to the inverter 6, so that an AC output of a predetermined voltage value can be fed to the vibrating compressor from any of multiple types of commercial powers of different voltages and multiple types of batteries of different voltages. With this arrangement, a power supply for a vibrating compressor that can be automatically adapted for a wide range of inputs, such as a 100-V or 200-V AC or a 12-V or 24-V DC can be provided.

Furthermore, the power supply of the present invention has voltage drop detection means (battery monitor 16) for detecting a drop of the input voltage of the DC/DC converter 17 below a reference value and virtually interrupting at least the AC output of the inverter 6. This voltage drop detection means distinguishes the voltage type of power connected, whether commercial power or battery, and judges the voltage drop detected in accordance with the voltage type detected. In this way, the power supply according to the present invention can detect a drop of battery voltage and interrupt the operation of the inverter, despite the capability of operating over a wide range of input voltages.

The inverter 6 connects the grounded side of a DC power supply, such as a battery 2, to one end of a switching element (FET 5), with the other end of the switching element (FET 5) connected in series to the other switching element (FET 4), feeds the power from the DC power supply to the other end of the other switching element (FET 4), and connects the connection of the two switching elements to one terminal of the vibrating compressor 1 via a capacitor 19, and one end of the switching element (FET 5) to the other terminal of the vibrating compressor 1. This arrangement allows one terminal of the vibrating compressor 1 to be grounded, and the case itself of the vibrating compressor to be connected to a cord, without the need for a polarity inversion circuit for generating a negative-potential power.

The control section 7 detects and holds a first peak of instantaneous current waveforms flowing in the half-periods in which the two switching elements (FETs 4 and 5) conduct alternately, and detects the timing at which the instantaneous current waveform again reaches the held first peak value so as to control the timing of the alternate switching of the two switching elements (FETs 4 and 5). This allows the output frequency of the inverter 6 to be controlled to follow the mechanical resonance frequency of the vibrating compressor.

Furthermore, a DC fan motor 18 is connected across the capacitor 19 to supply a constant voltage to the fan motor, regardless of changes in the voltage or the type of the DC power supply, such as a battery.

### BRIEF DESCRIPTION OF THE DRAWINGS

FIG. 1 is a schematic block diagram illustrating an example of the power supply for a vibrating compressor to which the present invention is applied.
FIG. 2 is a diagram illustrating in detail the circuit of the DC/DC converter 17 shown in FIG. 1.
FIG. 3 is a schematic diagram illustrating a control section consisting of a switching element control circuit and a frequency follow-up control circuit.
FIG. 4 is a circuit diagram illustrating in detail an example of the switching element control circuit shown in FIG. 3.
FIG. 5 is a circuit diagram illustrating in detail an example of the frequency follow-up control circuit shown in FIG. 3.
FIG. 6 is a diagram of assistance in explaining the detection of a second peak of current flowing in one FET constituting the inverter.
FIG. 7 is a diagram illustrating in detail a battery monitor.
FIG. 8 illustrates currents, or voltage waveforms, at various positions in the power supply for a vibrating compressor according to the present invention.
FIG. 9 is a schematic block diagram of a power supply for a vibrating compressor in the prior art.

### BEST MODE FOR CARRYING OUT THE INVENTION

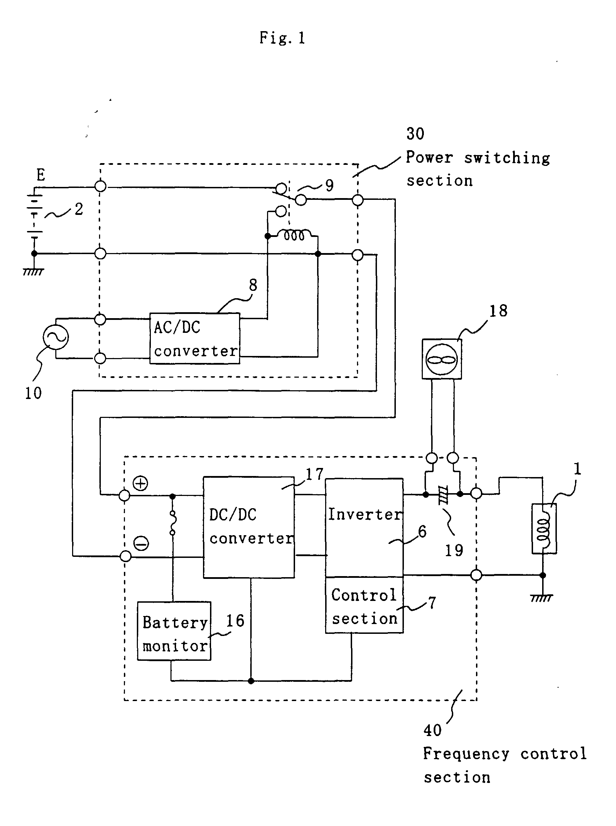

FIG. 1 is a schematic block diagram illustrating a power supply for a vibrating compressor to which the present invention is applied. In the figure, reference numeral 2 refers to a battery, 10 to a commercial AC power, 30 to a power switching section for changing over power supplied to a frequency control section 40, which is for controlling the frequency of power supplied to a vibrating compressor 1.

The vibrating compressor 1 is used for driving a refrigerator installed in automobiles, for example, or a refrigerator in a vehicle whose container itself serves as a refrigerator and which operates on a low AC voltage. The vibrating compressor 1 can supply power from the battery 2 mounted on an automobile when the automobile is in use, and from the commercial power 10 when the automobile is not in use. The changeover of power from the battery 2 to the commercial power 10 is carried out by an automatic switching device 9. That is, when an automobile arrives at a parking lot, for example, and the commercial power 10 is connected to the terminals of the vibrating compressor 1, a DC voltage from the AC/DC converter 8 activates a relay coil in the automatic switching device 9 to change over the relay contacts to the side of the AC/DC converter 8. The AC/DC converter 8, when connected to 100-V AC, for example, generates the same voltage as that of the 12-V battery 2, and when connected to 200-V AC, generates 24-V DC. One end, normally the negative side, of the battery 2 and one end of the output of the AC/DC converter 8 connected to it are grounded.

The power supply shown in FIG. 1 is assumed to be connected to a battery 2, or an AC power 10, whose voltage changes over a wide range. The frequency control section 40 of the power supply can supply a low AC voltage of a constant voltage value to the vibrating compressor 1 using 12-V or 24-V power from battery 2, or a 100-V or 200-V AC power 10. In the following description, the present invention will be described as operating on two voltages each of AC and DC, but the circuit can be easily modified to add other types of voltage, such as 32 V, to 12-V and 24-V DC.

The frequency control section 40 comprises a DC/DC converter 17, an inverter 6 and the control unit 7 thereof, a battery monitor 16, and a capacitor 19. A DC voltage that changes over a wide range is applied from the power switching section 30 to the DC/DC converter 17, as described above, and a constant 48-V DC voltage is supplied to the output terminals. The battery monitor 16 detects the voltage value of the battery to which the battery monitor 16 is connected, and generates a constant 12-V voltage during normal operation to supply to the DC/DC converter 17 and the control section 7, as will be described in detail later. When the battery voltage drops below a reference value, the battery monitor 16 detects it and turns off the output. When it is assumed that a 12-V or 24-V battery is connected, the battery monitor 16 detects which battery system is connected, and judges as abnormal when the voltage drops below 11 V or 22 V to turn off the output. If the voltage drop is not of that degree, the battery monitor 16 judges as normal, and generates a constant 12-V DC, whichever type of battery is connected.

As a constant 48-V DC voltage is supplied from the DC/DC converter 17 and a constant 12-V DC voltage is supplied from the battery monitor 16, except when the battery is abnormal, the inverter 6 and the control section 7 control so as to change the frequency applied by the inverter 6 to the vibrating compressor 1 by changing the pulse frequency of output waveforms of the first and second FETs constituting the inverter 6, as will be described in detail later.

The vibrating compressor 1 detects and holds the peak for the first half period of the current waveform flowing in the vibrating compressor 1, and detects a point at which the held peak value coincides with the peak for the latter half-period for use as a timing for switching the first and second FETs constituting the inverter 6.

The output of the inverter 6 is fed to the vibrating compressor 1 via the capacitor 19. At this time, a low DC voltage of an almost constant level can be obtained across the capacitor 19, as will be described later. A DC fan motor 18 for cooling the condenser of the refrigerator can be driven by this low DC voltage. One terminal of the vibrating compressor 1 is grounded.

In the following, each circuit of the power supply for a vibrating compressor according to the present invention will be described in more detail.

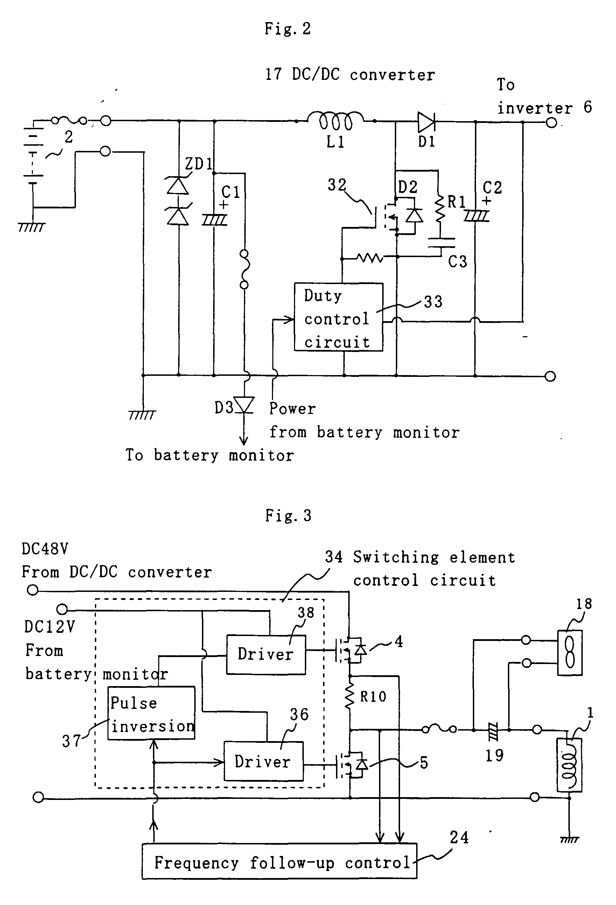

FIG. 2 is a diagram illustrating in detail the circuit of the DC/DC converter 17 shown in FIG. 1. The DC/DC converter 17 shown in the figure is operated so that a 48-V DC voltage is generated as an output on either of 12 V or 24 V, whichever the voltage of the battery connected is. When an FET 32 is turned on, energy is accumulated in an inductance coil L1 from the battery 2, and when the FET 32 is turned off, a voltage as the sum of the battery voltage E and the voltage of an inductance coil L1 is fed to a capacitor C2, and the voltage of the capacitor C2 is fed to the inverter 6 on the next stage.

It is a duty control circuit 33 shown in the figure that control the FET 32. This circuit 33 is operated on a constant 12-V voltage fed from the battery monitor 16, which will be described later, feeds back the output of the DC/DC converter 17 as a control signal, and supplies it to the FET 32 as a gate signal by controlling the duty ratio of the pulse output. With this, the duty control circuit 33 maintains the output voltage of the DC/DC converter 17 at a constant level, such as 48-V.

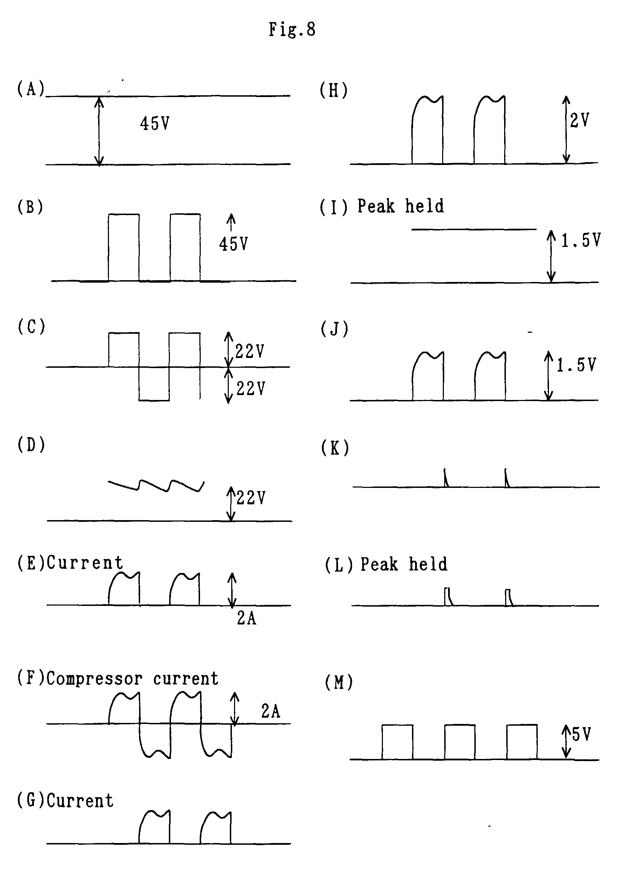

FIG. 3 is a schematic diagram illustrating FETs 4 and 5 constituting the inverter 6 shown in FIG. 1, and the control section 7 comprising a switching element control circuit 34 and a frequency follow-up control circuit 24. The switching element control circuit 34 generates a control signal for controlling so as to alternately turn on the FETs 4 and 5 of the inverter 6. FIG. 8(A) shows the converter output voltage, which is a constant 45-V DC voltage, fed to the inverter. FIG. 8(B) shows the voltage across the FET 5. As shown in the figure, when the FET 4 is on and the FET 5 is off, out of the two FETs that are alternately turned on, the voltage across the FET 5 is 45 V, while when the FET 4 is off and the FET 5 is on, the corresponding voltage is 0 V.

FIG. 8(C) shows the voltage across the vibrating compressor 1, which is an AC voltage of 22 V on the positive and negative sides by removing the DC component by a series-connected capacitor 19. FIG. 8(D) shows the voltage across the capacitor 19, which is an almost constant DC voltage containing a certain pulsating current component. By connecting a DC fan motor across the capacitor 19, an almost constant DC voltage can be supplied to the fan motor regardless of changes in battery voltage. FIG. 8(E) shows the current flowing in the FET 4, and (G) shows the current flowing in the FET 5. The current flowing in (G) with the reversed polarity and the current flowing in (E) are added up to a compressor current as shown in (F).

In FIG. 3, a driver 36 drives the FET 5 upon receipt of a pulse output from the frequency follow-up control circuit 24, which will be described later. This pulse output has a frequency that is controlled so as to follow the mechanical resonance frequency of the vibrating compressor 1. The pulse output is also applied to a driver 38 for driving the FET 4 after reversed in a pulse inversion circuit 37. Since these drivers 36 and 38 are powered by a 12-V DC voltage fed by the battery monitor, when the battery voltage falls, this 12-V DC voltage is not supplied, with the result that the FETs 4 and 5 of the inverter do not operate. As shown in the figure, one terminal of the vibrating compressor 1, which is connected directly to the ground side of the battery 2 with no elements interposed therebetween, can be grounded.

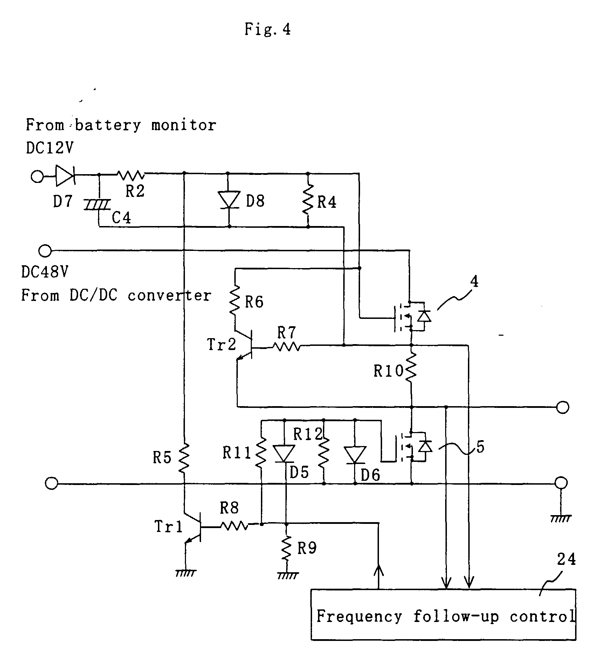

FIG. 4 is a circuit diagram illustrating in detail an example of the switching element control circuit 34 shown in FIG. 3. As described earlier, the pulse output controlled to a predetermined frequency by the frequency follow-up control circuit 24 is fed to the FET 5 via a resistor R11, and at the same time, applied to the base of the transistor Tr1 via a resistor R8. Although a 12-V DC voltage is fed by the battery monitor to the gate of the FET 4, the gate voltage of the FET 4 is not fed because the transistor TR1 is turned on when a pulse output is generated by the frequency follow-up control circuit 24. That is, the pulse supplied to the gate of the FET 5 is reversed and fed to the gate of the FET 4. Since the 12-V DC voltage as a power voltage is not supplied when the battery voltage drops, there is no gate voltage supplied to the FET 4. Furthermore, since this power voltage is also supplied to the frequency follow-up control circuit 24, as will be described later, there is no gate voltage supplied to the FET 5. Thus, as the battery voltage drops, the inverter shuts off current supply. A transistor TR2 is provided to protect the circuit against an output short-circuiting.

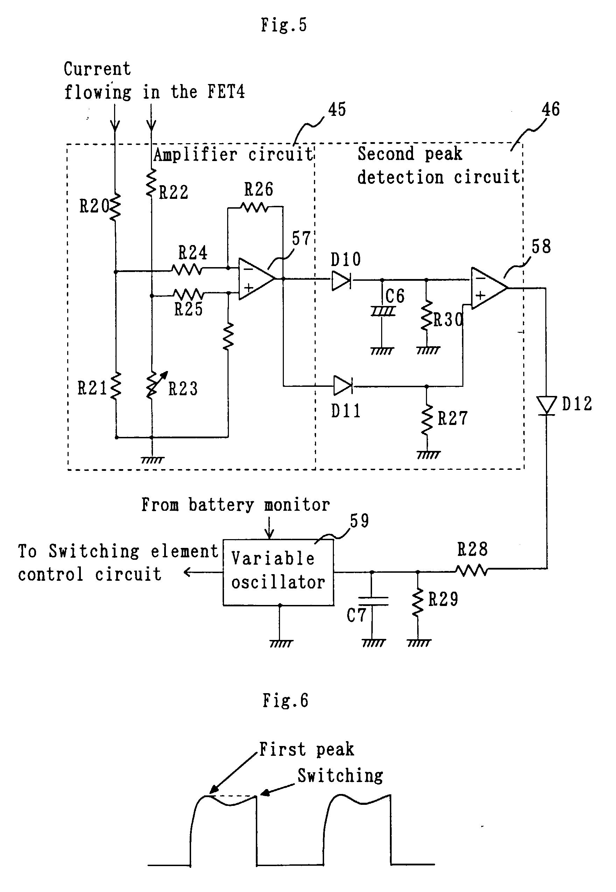

FIG. 5 is a circuit diagram illustrating in detail an example of the frequency follow-up control circuit. The instantaneous value of current flowing in the FET 4 of the inverter 6 is detected as a voltage signal by a resistor 10 series-connected to the FET 4, as shown in FIG. 3, and fed to the frequency follow-up control circuit shown in FIG. 5. As this input is fed to the inverting and non-inverting terminals of a differential amplifier 57 in an amplifier circuit 45, an instantaneous voltage waveform corresponding to the instantaneous current value flowing in the FET 4 of the inverter 6 can be obtained as an output of the differential amplifier 57. Note that the circuit can be modified so that a current flowing in the FET 5, in place of the FET 4, can be detected.

This instantaneous voltage waveform is fed to a second peak detection circuit 46. The first peak of the voltage waveform fed through a diode D10 is held by a predetermined time constant in a capacitor C6, and the first peak voltage held is applied to the inverting terminal of the differential amplifier 58, as shown in FIG. 6. A resistor R30 connected to the inverting terminal is for adjusting this time constant. When a second peak of the instantaneous voltage waveform input to the non-inverting terminal of the differential amplifier 58 exceeds the peak held by the capacitor 6, as shown in FIG. 6, the differential amplifier 58 generates an output. This output is fed to a variable oscillator 59 as a control voltage. A resistor R29 and a capacitor C7 is for adjusting the time constant and controlling the width of the output pulse.

FIGS. 8(H) through (M) show voltage waveforms during the period. FIG. 8(H) is a waveform of the voltage input to the second peak detection circuit 46 that corresponds to the current waveform (FIG. 8(E)) flowing in the aforementioned FET 4. (I) shows a constant voltage whose peak is held by the capacitor C6 and fed to the inverting terminal of a differential amplifier 58. (J) shows an instantaneous voltage waveform input to the non-inverting terminal of the differential amplifier 58 that is equal to the waveform (H) from which a certain amount of voltage drops in a diode D11. (K) shows an output of the differential amplifier 58 produced when the voltage on the non-inverting terminal exceeds the voltage on the inverting terminal. When this output is generated the output of the differential amplifier 58 is turned off immediately after a pulse-like waveform as shown in the figure is generated because control is effected so that the current flowing in the FET 4 of the inverter 6 is turned off. (L) shows the waveform (K) held at a predetermined time constant. (M) shows the pulse output of the variable oscillator 59 controlled by (L) as a control voltage.

In this way, the variable oscillator 59 can control so that the oscillating frequency thereof can be changed in accordance with the output timing of the differential amplifier 58. The oscillating frequency output is fed to the aforementioned switching element control circuit 34 so as to control the inverter 6 to a frequency that follows the mechanical resonance frequency of the vibrating compressor 1, as described above.

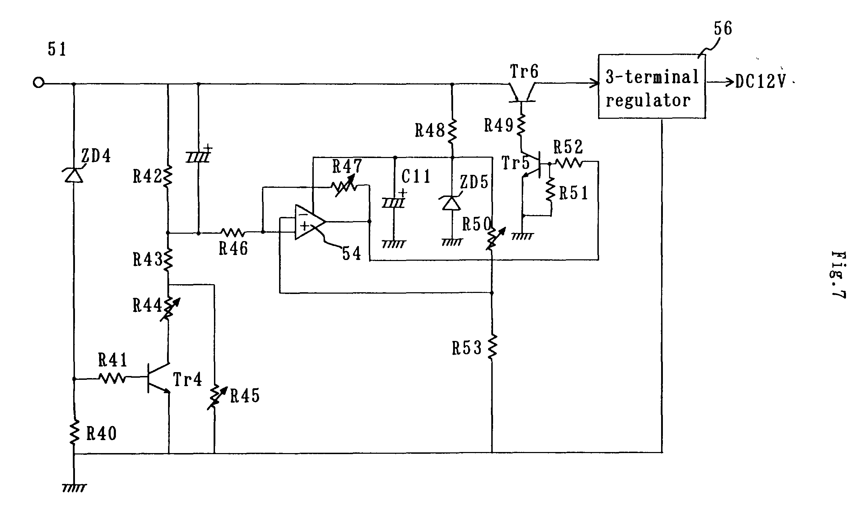

FIG. 7 shows the details of the battery monitor. This example is assumed to be connected to either of a 12-V or 24-V battery (or 100-V or 200-V AC commercial power). This battery monitor is intended primarily to detect a drop of battery voltage. It generally serves as means for detecting a voltage drop, and when connected to a commercial power, detects a drop of commercial power. A transistor Tr4 judges which of the 12-V or 24-V battery is connected. The circuit constant of this circuit is set so that when the voltage on the terminal 51 impressed by the battery is higher than 18 V as a threshold value between 12 V and 24 V, a Zener diode ZD4 conducts, causing the transistor Tr4 to turn ON. That is, this circuit discriminates the type of battery (or commercial power).

First, assume that a 12-V battery is connected to the circuit. Since the transistor Tr4 maintains the OFF state, as described above, a voltage (set to 5 V, for example) obtained by proportioning 12 V at the ratio of R42: (R43+R45) is applied to the non-inverting terminal of the operational amplifier 54. At this time, a voltage (also set to 5 V, for example) obtained by proportioning the constant voltage across a Zener diode ZD5 at the ratio of R50: R53 is applied to the inverting terminal of the operational amplifier 54. Whereas the voltage applied to the inverting terminal of the operational amplifier 54 is kept at a predetermined voltage level by the Zener diode ZD5, the voltage applied to the non-inverting terminal of the operational amplifier 54 is proportional to the battery voltage. Consequently, so long as the battery voltage is lower than 12 V, the operational amplifier does not generate any output because the voltage applied to the non-inverting terminal of the operational amplifier 54 is lower than the constant voltage applied to the inverting terminal thereof. If the battery voltage exceeds 12 V at this time, the voltage applied to the non-inverting terminal becomes higher than the constant voltage applied to the inverting terminal of the operational amplifier, causing the operational amplifier to produce a positive output.

Even when the battery voltage drops below 12 V in the state where this power supply is operated on the battery, that is, where the operational amplifier 54 normally generates an output, the operational amplifier 54 is not turned off immediately because the output of the operational amplifier 54 is fed back through a feedback resistor R47. Moreover, the circuit constant can be set so that the operational amplifier 54 is turned off only when a voltage drops, or the battery voltage drops below 11 V, for example. Since this circuit judges that a 24-V battery is connected when the battery voltage exceeds 18 V, as described earlier, the operational amplifier 54 is turned off, as described earlier (when the battery voltage is below 24 V).

Next, consider the case where a 24-V battery is connected. In this case, a voltage obtained by proportioning 24 V at the ratio of R42: (R43+R44· R45/(R44+R45) is applied to the non-inverting terminal of the operational amplifier 54 because the transistor Tr4 is turned on. To the inverting terminal of the operational amplifier 54 applied is the same voltage as in the case of a 12-V battery by the Zener diode ZD5. For this reason, this circuit performs exactly the same operation as in the aforementioned case where a 12-V battery is connected by setting so that the battery proportional voltage applied to the non-inverting terminal becomes the same voltage (5 V, for example) as in the case of connecting to the 12-V battery. That is, when the battery voltage exceeds 24 V, for example, the operational amplifier 54 generates an output. And, once it produces an output, the operational amplifier 54 is turned off only when the battery voltage drops below 22 V.

As the operational amplifier 54 generates an output, it causes the transistor Tr5 to turn on, and the transistor Tr6 to turn on, thereby applying the battery voltage applied to the terminal 51 to a three-terminal regulator. The three-terminal regulator functions so as to generate a constant 12-V voltage so long as the transistor Tr6 is kept turned on and the battery voltage, whether 12 V or 24 V, is kept applied.

By providing such a battery monitor and supplying its output voltage to other circuits as their power source, when the output voltage is turned off due to a battery voltage drop, the other circuits can also be turned off. Although description has been made in the foregoing on the assumption that this circuit is connected to 12-V and 24-V batteries, slight circuit modifications allow this circuit to be adapted for various other types of batteries. This circuit, when connected to any type of battery, can automatically detect a voltage drop in accordance with that battery.

### INDUSTRIAL APPLICABILITY

As described above, the present invention can provide a power supply for a vibrating compressor that can adapt for a wide range of input voltages, a 100-V or 200-V AC, or a 12-V or 24-V DC, for example.

## Claims

1. A power supply for a vibrating compressor comprising a direct-current (DC) power supply, an inverter circuit section having two switching elements for converting DC into alternating current (AC) though the alternate switching of said switching elements, and a control section for controlling an AC output to be supplied to said vibrating compressor from said inverter circuit section, said power supply comprising;
a switching means for selectively changing over said DC power supply from a battery to a voltage obtained by converting a commercial power by an AC/DC converter into a DC of the corresponding voltage, and vice versa, and
a DC/DC converter for controlling output voltage to a predetermined value, regardless of changes in input voltage, to feed the output voltage to said inverter circuit section, so that an AC output of a predetermined voltage value can be supplied to the vibrating compressor relying on whichever of multiple types of commercial powers of different voltages or multiple types of batteries of different voltages.

2. A power supply for a vibrating compressor as set forth in Claim 1 further comprising a voltage drop detection means for detecting a drop of the voltage input to said DC/DC converter below a reference value, and virtually interrupting the AC output of said inverter circuit section; said detection means discriminating between a commercial power connected and a battery, and judging a drop of the detected voltage based on the power type.

3. A power supply for a vibrating compressor comprising a d-c (DC) power supply, an inverter circuit section having two switching elements for converting DC into alternating current (AC) though the alternate switching of said switching elements, and a control section for controlling an AC output to be supplied to said vibrating compressor from said inverter circuit section, said power supply comprising;
two terminals of said DC power, one of said two terminals being grounded,
said one terminal grounded being connected to one end of one of said switching elements of said inverter circuit section, and the other end of said one switching element being connected in series to one end of the other switching element, with a voltage from said DC power supply supplied to the other end of said other switching element, and
one terminal of said vibrating compressor being connected to the connected point of said two switching elements via a capacitor, with said one end of said one switching element connected to the other terminal of said vibrating compressor so that said other terminal of said vibrating compressor can be grounded.

4. A power supply for a vibrating compressor as set forth in Claim 3 wherein said control section detects and holds a first peak in the waveform of an instantaneous current value flowing during a half period of AC output in which said one or other switching element of said inverter circuit section alternately conducts, and controls the timing of alternate switching of said two switching elements by detecting a timing at which said instantaneous current waveform reach again said first peak value held by said control section so as to change the output frequency of said inverter circuit section.

5. A power supply for a vibrating compressor as set forth in Claim 3 wherein a DC fan motor is connected across said capacitor.
